(19) **Europäisches Patentamt / European Patent Office / Office européen des brevets**

(11) **EP 3 345 175 B1**

(12) **FASCICULE DE BREVET EUROPEEN**

(45) Date de publication et mention de la délivrance du brevet:
**30.10.2019 Bulletin 2019/44**

(21) Numéro de dépôt: **16784401.8**

(22) Date de dépôt: **01.09.2016**

(51) Int Cl.:
*G01C 21/34* (2006.01)  *G06F 17/16* (2006.01)
*G06Q 10/04* (2012.01)  *G09C 1/00* (2006.01)
*H04L 9/00* (2006.01)  *G06F 16/9537* (2019.01)

(86) Numéro de dépôt international:
**PCT/EP2016/070570**

(87) Numéro de publication internationale:
**WO 2017/037151 (09.03.2017 Gazette 2017/10)**

(54) **MÉTHODE D'INTERROGATION CONFIDENTIELLE D'UN SERVICE GÉODÉPENDANT PAR CRYPTOGRAPHIE HOMOMORPHE**

VERFAHREN ZUR VERTRAULICHEN ABFRAGE EINES ORTSBASIERTEN DIENSTES DURCH HOMOMORPHE KRYPTOGRAPHIE

METHOD FOR CONFIDENTIALLY QUERYING A LOCATION-BASED SERVICE BY HOMOMORPHIC CRYPTOGRAPHY

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **03.09.2015 FR 1558159**

(43) Date de publication de la demande:
**11.07.2018 Bulletin 2018/28**

(73) Titulaire: **Commissariat à l'Energie Atomique et aux Energies Alternatives
75015 Paris (FR)**

(72) Inventeurs:
• **SIRDEY, Renaud
78720 Cernay-la-ville (FR)**
• **STAN, Oana
91300 Massy (FR)**

(74) Mandataire: **Brevalex
95, rue d'Amsterdam
75378 Paris Cedex 8 (FR)**

(56) Documents cités:
• **SAMANTHULA BHARATH K ET AL: "Privacy-Preserving Protocols for Shortest Path Discovery over Outsourced Encrypted Graph Data", 2015 IEEE INTERNATIONAL CONFERENCE ON INFORMATION REUSE AND INTEGRATION, IEEE, 13 août 2015 (2015-08-13), pages 427-434, XP032798221, DOI: 10.1109/IRI.2015.72**

## Description

## DOMAINE TECHNIQUE

La présente invention concerne notamment le domaine des services géodépendants ou services LBS (*Location Based Services*). Une application importante de l'invention concerne le domaine de la navigation par itinéraires masqués.

## ÉTAT DE LA TECHNIQUE ANTÉRIEURE

Le document XP032798221, SAMANTHULA BHARATH K ET AL: "Privacy-Preserving Protocols for Shortest Path Discovery over Outsourced Encrypted Graph Data", les auteurs considèrent le problème suivant: étant donné un graphe G représenté par exemple des réseaux routiers ou sociaux, stocké dans un nuage en format chiffré, l'utilisateur souhaite extraire de manière privée le chemin le plus court d'une source s à une destination **t**. Le premier protocole proposé permet de calculer le chemin le plus court sous un paramètre d'un unique nuage, tandis que le second protocole est proposé dans un environnement de nuages fédéré.

Les services géodépendants (LBS) ont connu un développement spectaculaire ces dernières années avec la banalisation des terminaux mobiles intelligents de troisième et quatrième génération. Parmi les services LBS on peut citer la recherche de points d'intérêt ou POI (*Point Of Interest*), la localisation d'un utilisateur, ou encore la recherche d'itinéraires.

Les services LBS ont pour point commun de fournir une information fonction de la position de l'utilisateur. La position d'un utilisateur étant une information sensible, les services en question doivent pouvoir garantir confidentialité et respect de la vie privée (*privacy*) de l'utilisateur. Cette exigence est d'autant plus nécessaire que le service LBS peut être offert de manière délocalisée au moyen d'une plateforme de *cloud computing*.

Différents schémas ont été proposés pour assurer la confidentialité des données de localisation des utilisateurs : recours à un tiers de confiance ou TTP (*Trusted Third Party*), schéma semi-distribué faisant appel à au moins deux entités indépendantes, architecture client-serveur, schéma collaboratif à confidentialité distribuée au sein d'un réseau *ad hoc.*

L'architecture client-serveur présente l'avantage de ne pas recourir à un tiers de confiance. Cependant, la préservation de la confidentialité requiert alors que le serveur, considéré *a priori* comme non fiable, puisse fournir l'information demandée par l'utilisateur sans que la position de ce dernier ne lui soit révélée. Une telle méthode d'interrogation confidentielle, autrement dit sans possibilité pour le fournisseur du service d'avoir accès à l'argument en clair de la requête de l'utilisateur, en l'occurrence ici sa position, est appelée méthode PIR (*Private Information Retrieval*).

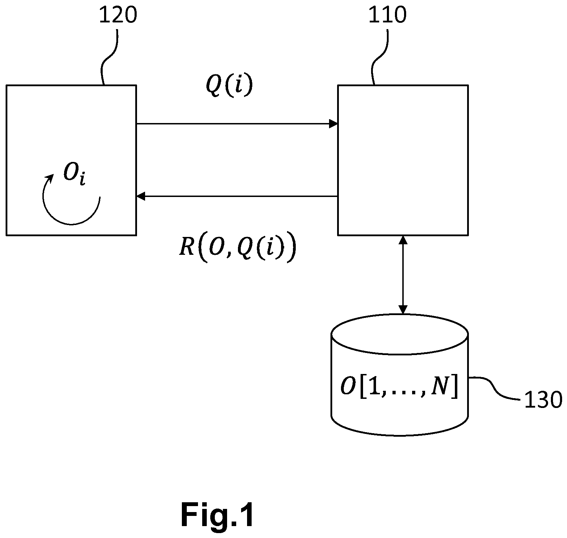

La Fig. 1 illustre le principe d'une méthode PIR dans une architecture client-serveur.

Le serveur d'un fournisseur de service LBS, 110, dispose d'une base de données, 130 qui contient $N$ enregistrements, soit $O[1,...,N]$, chaque enregistrement étant constitué par un élément d'information.

Un utilisateur (ou client) 120 envoie une requête $Q(i)$ où $i$ est un index paramétrant la position de l'utilisateur, celui-ci souhaitant en fait obtenir l'élément d'information $O_i$ de la base de données. La requête $Q(i)$ est chiffrée de sorte qu'il est impossible pour le serveur de retrouver la valeur d'index $i$. Le serveur 110 calcule à partir du tableau $O$ et de la requête $Q(i)$ un résultat $R(O,Q(i))$ au moyen d'une transformation mathématique et ce résultat est renvoyé à l'utilisateur. Celui-ci déchiffre le résultat $R(O,Q(i))$ pour obtenir l'élément $O_i$.

On trouvera un exemple de méthode PIR dans l'article de G. Ghinita et al. intitulé « Private queries in Location Based Services : anonymizers are not necessary » publié dans Proc. of Sigmod 2008, pp. 121-132. Cette méthode PIR assure la confidentialité de la position de l'utilisateur grâce à l'intractabilité du problème de résiduosité quadratique selon lequel il est extrêmement difficile de déterminer si un entier est un résidu quadratique modulo $n$ , où $n = q_1 q_2$ est un entier avec $q_1,q_2$ grands nombres premiers, sans connaître $q_1$ et $q_2$. La méthode PIR décrite dans cet article utilise un tableau dans lequel chaque cellule correspond à une position et contient la liste des POI les plus proches de cette position. Elle permet ainsi à un utilisateur d'obtenir les POI les plus proches de lui.

Bien que cette méthode PIR permette d'obtenir un degré élevé de confidentialité, elle est relativement complexe et nécessite d'effectuer un grand nombre de calculs.

L'article de S. Bhatath et al. intitulé « Privacy-preserving protocols for shortest path discovery over outsourced encrypted data graph data" publié dans IEEE Int'l Conférence on information reuse and intégration, 13.8.2015, pages 427-434, décrit une méthode de navigation confidentielle par interrogation d'une base de données. Toutefois dans cette méthode le serveur ne calcule pas le chemin optimal, cette tâche est dévolue à l'utilisateur qui possède généralement des ressources de calcul réduites. En outre, le chemin optimal est déterminé de manière incrémentale, ce qui augmente d'autant le temps de réponse de la navigation.

Le but de la présente invention est par conséquent de proposer une méthode d'interrogation confidentielle d'un fournisseur de service de service géodépendant, en particulier d'un service de navigation, qui soit plus simple que celle de l'art antérieur tout en garantissant un degré élevé de confidentialité.

## EXPOSÉ DE L'INVENTION

La présente invention est définie par une méthode de navigation confidentielle d'un utilisateur au sein d'une zone géographique donnée, par interrogation confidentielle d'un serveur équipé d'une base de données, selon laquelle :

- ladite zone géographique contient une pluralité de points de référence, chaque couple de points de référence étant associé à un indice ;
- ladite base de données contient pour chaque indice correspondant à un couple de points de référence, un enregistrement d'un chemin optimal au sens d'un critère prédéterminé entre ces points, le chemin optimal étant défini par une liste d'indices de points de référence $(k_1,....,k_Q)$ par lequel passe ce chemin ;
- l'utilisateur détermine les indices respectifs $(i_A, i_B)$ d'un couple de points de départ, $A$, et de destination, $B$, et en déduit un indice $i$ correspondant du couple de points $(A,B)$ ;
- l'utilisateur construit un vecteur $\mathbf{V_i}$ dont tous les éléments sauf celui de l'indice $i$ sont des chiffrés de zéro et dont l'élément d'indice $i$ est un chiffré de un, le chiffrement étant effectué au moyen d'un cryptosystème probabiliste vérifiant les propriétés homomorphiques suivantes :

$$Dec_{sk}\left[ Enc_{pk}(a,r) \oplus Enc_{pk}(b,r) \right] = a+b$$

$$Dec_{sk}\left[ a \otimes Enc_{pk}(b,r) \right] = a.b$$

où $(sk,pk)$ est une paire de clés privée et publique de l'utilisateur, $Enc_{pk}$ est une opération de chiffrement au moyen de la clé publique, $Dec_{sk}$ une opération de déchiffrement à l'aide de la clé privée, $a,b$ sont des clairs, $\oplus$ est un opérateur sur l'espace des chiffrés et $\otimes$ est un opérateur entre l'espace des clairs et l'espace des chiffrés ;
- l'utilisateur transmet au serveur une requête ayant pour argument le vecteur $\mathbf{V_i}$ ;
- le serveur effectue un produit scalaire entre le vecteur des enregistrements $\mathbf{O}$ et le vecteur $\mathbf{V_i}$ et renvoie le produit scalaire $C_i$ ainsi obtenu à l'utilisateur ;
- l'utilisateur déchiffre le produit scalaire $C_i$ pour obtenir l'enregistrement d'indice $i$ de la base de données, ledit enregistrement donnant le chemin optimal entre les points $A$ et $B$.

Le cryptosystème peut être choisi par exemple parmi le cryptosystème de Pallier, le cryptosystème de Regev et le cryptosystème de Fau-Vercauteren.

Dans une utilisation dynamique, le serveur met à jour périodiquement ou sur requête les chemins optimaux entre les points de référence de la zone géographique.

Avantageusement, le serveur stocke une pluralité de vecteurs $\mathbf{V_i}$ relatifs à une pluralité $M$ de couples de points favoris de départ et de destination.

Dans ce cas, l'utilisateur transmet au serveur une sous-requête spécifiant parmi la pluralité de couples de points favoris, le couple pour lequel il souhaite obtenir un itinéraire et que le serveur retourne le produit scalaire entre le vecteur des enregistrements $\mathbf{O}$ et le vecteur $\mathbf{V_i}$ correspondant à cette sous-requête.

Alternativement, le serveur effectue périodiquement un calcul de produit scalaire entre les vecteurs $\mathbf{V_i}$ relatifs aux couples de points favoris et le vecteur des enregistrements $\mathbf{O}$, le serveur construisant un vecteur $\mathbf{C}$ des produits scalaires ainsi obtenus.

Dans ce cas, l'utilisateur construit un second vecteur $\mathbf{U_j}$ de taille $M$ dont tous les éléments sauf celui d'un indice $j$ sont des chiffrés de zéro et dont l'élément d'indice $j$ est un chiffré de un, le chiffrement étant réalisé au moyen dudit cryptosystème, l'utilisateur transmet au serveur une sous-requête ayant pour argument le second vecteur $\mathbf{U_j}$.

Le serveur effectue avantageusement un second produit scalaire entre le vecteur C et le vecteur $\mathbf{U_j}$ et renvoie à l'utilisateur le second produit scalaire ainsi obtenu.

L'utilisateur déchiffre alors le second produit scalaire pour obtenir le produit scalaire $C_i$, puis déchiffre le premier produit scalaire pour obtenir l'itinéraire pour le couple de points souhaités.

## BRÈVE DESCRIPTION DES DESSINS

D'autres caractéristiques et avantages de l'invention apparaîtront à la lecture d'un mode de réalisation préférentiel de l'invention en référence aux figures jointes parmi lesquelles :

La Fig. 1 représente le principe d'une méthode PIR connue de l'état de la technique;

La Fig. 2 représente un ordinogramme de la méthode PIR selon un mode de réalisation de l'invention;

La Fig. 3 représente un ordinogramme d'une navigation à itinéraires masqués utilisant la méthode PIR de la Fig. 2.

## EXPOSÉ DÉTAILLÉ DE MODES DE RÉALISATION PARTICULIERS

La méthode d'interrogation confidentielle selon la présente invention sera décrite ci-après dans le contexte d'une architecture client-serveur comme précédemment décrite en relation avec la Fig. 1. Dans un mode de réalisation particulier de l'invention le serveur fournira un service géodépendant (LBS), notamment, la recherche de points d'intérêt (POI) ou un service de navigation à itinéraires masqués comme décrit en détail plus loin. Cependant, dans sa forme la plus générale, l'invention pourra trouver application dans d'autres types de services, par exemple un service de consultation de dossier médical.

Quel que soit le type de service envisagé, le serveur est équipé d'une base de données contenant une pluralité d'enregistrements indexés par un index $i$. Ainsi la base de données peut être considérée comme un vecteur $\mathbf{O} = (O_1 ... O_N)^T$, chaque élément du vecteur correspondant à un enregistrement. Sans perte de généralité, on supposera dans la suite que les enregistrements sont représentés par des éléments de $\mathbf{Z}_{n2} = \mathbf{Z}/n^2\mathbf{Z}$ où $n = pq$ est un entier, produit de deux (grands) nombres premiers $p$ et $q$.

L'idée à la base de l'invention est d'utiliser un cryptosystème probabiliste ayant des propriétés homomorphiques particulières permettant d'extraire un enregistrement à l'aide d'un simple produit scalaire.

On rappelle tout d'abord qu'un chiffrement probabiliste $Enc(.,r)$ est un chiffrement dépendant d'un paramètre aléatoire $r$. Le chiffrement d'un message clair $m$ peut ainsi donner différents messages chiffrés $Enc(m, r)$ suivant la valeur prise par le paramètre $r$. Toutefois, quelle que soit la valeur prise par ce paramètre, le déchiffrement de $Enc(m, r)$ redonne toujours le message clair $m$. Autrement dit, il existe une fonction de déchiffrement $Dec$ telle que :

$$Dec\big(Enc(m,r)\big) = m \tag{1}$$

On rappelle ensuite qu'un chiffrement homomorphe est un chiffrement asymétrique $Enc_{pk}$ (de clé publique $pk$) vérifiant la propriété suivante:

$$Enc_{pk} : \ X \rightarrow Y$$

$$\forall a,b \in X , \ Enc_{pk}\big(a+b\big) = Enc_{pk}\big(a\big) \oplus Enc_{pk}\big(b\big) \tag{2}$$

où $X$ est l'espace des messages clairs (dit plus simplement espace des clairs) et $Y$ est l'espace des messages chiffrés (dit plus simplement espace des chiffrés), + une opération additive dans l'espace des clairs conférant à $X$ une structure de groupe, $\oplus$ une opération dans l'espace des chiffrés conférant à $Y$ une structure de groupe. On comprend ainsi que l'application $Enc_{pk}$ de $(X,+)$ dans $(Y, \oplus)$ est un homomorphisme de groupes. Si l'on note $Dec_{sk}$ la fonction de déchiffrement correspondant à $Enc_{pk}$ (où $sk$ est la clé secrète de l'utilisateur), la propriété (1) peut s'exprimer alternativement par :

$$Dec_{sk}\big[ Enc_{pk}\big(a\big) \oplus Enc_{pk}\big(b\big) \big] = a+b \tag{3}$$

Autrement dit, il est possible d'effectuer une opération additive entre deux clairs à partir d'une opération correspondante entre leurs chiffrés.

On supposera dans la suite que $X = \mathbf{Z}_n = \mathbf{Z}/n\mathbf{Z}$ et que $Y = \mathbf{Z}_{n2} = \mathbf{Z}/n^2\mathbf{Z}$.

Il résulte de ce qui précède qu'une méthode de chiffrement probabiliste homomorphe $Enc_{pk}(.,r)$ vérifie la relation suivante :

$$Dec_{sk}\big[ Enc_{pk}\big(a,r\big) \oplus Enc_{pk}\big(b,r\big) \big] = a+b \tag{4}$$

où l'on a convenu comme précédemment que $r$ est un paramètre aléatoire, $pk$ est la clé publique de chiffrement et $sk$ la clé secrète de déchiffrement. Les messages $a$ et $b$ sont des messages en clair.

En sus de la propriété d'homomorphisme additif exprimée en (4), on suppose que la méthode de chiffrement vérifie la propriété suivante :

$$Dec_{sk}\left[ a \otimes Enc_{pk}\left(b,r\right)\right] = a.b \tag{5}$$

où $\otimes$ est une opération externe de $X \times Y \to Y$ et où . est une opération multiplicative dans $Y$. En d'autres termes, il est possible d'effectuer une opération multiplicative entre deux clairs à partir du chiffré de l'un d'eux. Il est à noter que la relation (5) n'est pas à proprement parler une propriété d'homomorphisme dans la mesure où l'ensemble de départ est le produit cartésien $X \times Y$. Il n'est donc pas nécessaire que le cryptosystème soit de type FHE (*Fully Homomophic Encryption*).

On connait des cryptosystèmes probabilistes vérifiant les conditions (4) et (5), notamment le cryptosystème de Pallier, dans lequel le chiffrement d'un message $0 \leq m < n$ est obtenu par :

$$c = Enc\left(m,r\right) = \left(1+n\right)^{m}.r^{n} \bmod n^{2} \tag{6}$$

où $r$ est un entier aléatoire tel que $0 < r < n$, $n = pq$ est la clé publique, $p,q$ étant deux nombres premiers de grande taille.

Réciproquement le déchiffrement d'un chiffré c est obtenu par :

$$m = \frac{\left(c.r^{-n} \bmod n^{2}\right) - 1}{n} \tag{7}$$

avec $r = c^{(n-1 \bmod \phi)} \bmod n$ et $\phi = (p-1)(q-1)$ est la clé privée.

Compte tenu de la définition (6), le cryptosystème de Pallier vérifie les propriétés suivantes :

$$Dec\left(Enc\left(a,r\right)Enc\left(b,r\right)\right) = a + b \tag{8}$$

et

$$Dec\left(Enc\left(b,r\right)^{a}\right) = a + b \tag{9}$$

En comparant les relations (4)-(5) avec les relations (8)-(9), on comprend que les opérations $\oplus$ et $\otimes$ correspondent respectivement à une multiplication et une exponentiation (modulo $n^{2}$) dans l'espace des chiffrés $\mathbf{Z}_{n2}$.

D'autres cryptosystèmes vérifient également les propriétés (3) et (4), notamment les cryptosystèmes de Fau-Vercauteren et de Regev.

Quel que soit le cryptosystème choisi, l'utilisateur souhaitant obtenir l'enregistrement $O(i)$ de la base de données construit le vecteur suivant :

$$\mathbf{V}_{i} = \left(Enc\left(0,r_{1}\right),...,Enc\left(1,r_{i}\right),...,Enc\left(0,r_{N}\right)\right)^{T} \tag{10}$$

où $r_{1},...,r_{N}$ sont des résultats de tirage de la variable aléatoire $r$. Les éléments du vecteur $\mathbf{V_{i}}$ sont par conséquent tous des chiffrés de 0 sauf un élément en position $i$ qui est un chiffré de 1.

Le vecteur $\mathbf{V_{i}}$ est transmis sous forme de requête au serveur du fournisseur de service. Celui-ci est incapable de discerner dans le vecteur $\mathbf{V_{i}}$ l'élément qui correspond au chiffré de 1.

Le serveur effectue alors le produit scalaire :

$$C_{i} = \left\langle \mathbf{O}, \mathbf{V_{i}}\right\rangle = \bigoplus_{k=1}^{N}\left(O_{k} \otimes Enc\left(\delta_{k-i}, r_{k}\right)\right) \tag{11}$$

où $\delta_{k-i} = 1$ si $k = i$ et $\delta_{k-i} = 0$ et retourne le résultat $C_{i}$, qui est un chiffré, à l'utilisateur. Celui-ci effectue le déchiffrement :

$$m_i = Dec(C_i) \qquad (12)$$

soit, en utilisant successivement les propriétés homomorphiques (4) et (5) du cryptosystème :

$$m_i = \sum_{k=1}^{N} Dec\left(Enc\left(\delta_{k-i}, r_k\right) \otimes O_k\right) = \sum_{k=1}^{N} \delta_{k-i} O_k = O_i \qquad (13)$$

On comprend ainsi que l'utilisateur puisse ainsi retrouver l'enregistrement en clair, $O_i$, de la base de données sans qu'à aucun moment le serveur soit à même de savoir de quel enregistrement il s'agit.

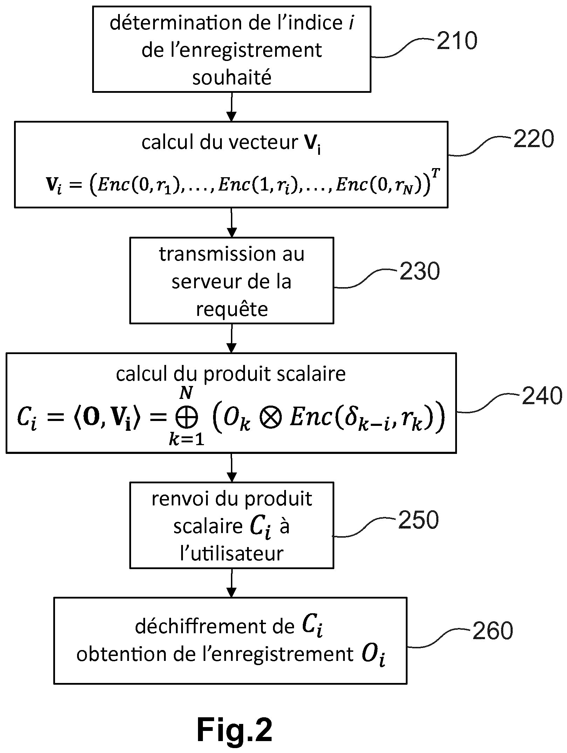

La Fig. 2 représente de manière schématique un ordinogramme de la méthode d'interrogation confidentielle (PIR) utilisée dans la présente l'invention.

A l'étape 210, l'utilisateur détermine l'indice $i$ de l'enregistrement qu'il souhaite obtenir dans la base de données du serveur.

A l'étape 220, l'utilisateur chiffre $N$ -1 fois la valeur nulle $Enc(0, r_k)$, $k = 1,...,N$, $k \neq i$ et une fois la valeur 1, $Enc(0, r_i)$. Il construit le vecteur $\mathbf{V_i}$ défini par (10).

A l'étape 230, l'utilisateur transmet au serveur du fournisseur de service sa requête ayant pour argument le vecteur $\mathbf{V_i}$.

A l'étape 240, le serveur effectue, selon l'expression (11), le produit scalaire $C_i$ du vecteur $\mathbf{O}$ ayant pour éléments les enregistrements de la base de données avec le vecteur $\mathbf{V_i}$ reçu de l'utilisateur.

A l'étape 250, le serveur renvoie le résultat chiffré $C_i$ à l'utilisateur.

A l'étape 260, l'utilisateur déchiffre le résultat chiffré $C_i$ pour obtenir l'enregistrement en clair $O_i$.

La méthode d'interrogation confidentielle de la présente invention permet à un utilisateur de faire évaluer à un serveur une fonction $F(a)$ où $a$ est une donnée secrète de l'utilisateur et où $F$ une fonction connue du serveur. En effet, le serveur peut calculer, ou bien faire calculer par une entité tierce, la liste des valeurs $F(a_i)$, $i = 1,..., N$ prises par la fonction $F$ sur l'ensemble $A = \{a_i | i = 1,...,N\}$ des valeurs discrètes possibles de $a$. L'ensemble $A$ est ordonné et la relation d'ordre est connue tant de l'utilisateur que du serveur. Les enregistrements de la base de données sont constitués par les valeurs $F(a_i)$, $i = 1,...,N$.

Lorsque l'utilisateur souhaite obtenir la valeur prise par la fonction $F$ en $a_i$, il lui suffit de transmettre au serveur une requête ayant pour argument le vecteur $\mathbf{V_i}$, selon la méthode de la Fig. 2. Le serveur lui retourne alors le produit scalaire $C_i$ qui est déchiffré par l'utilisateur pour retrouver la valeur $F(a_i)$.

En particulier, les valeurs $a_i$ peuvent être des positions possibles d'un utilisateur et la fonction $F$ être celle d'un service géodépendant. Par exemple, $F(a_i)$ peut donner la liste des points d'intérêt (POI) les plus proches du point de position $a_i$.

La présente invention s'applique avantageusement à une méthode de navigation confidentielle au sens où les itinéraires sont masqués au serveur. Plus précisément, une telle navigation permet à un utilisateur d'obtenir un itinéraire optimal, au sens d'un certain critère, entre un point de départ et un point d'arrivée sans dévoiler au serveur de navigation ni le point de départ, ni le point d'arrivée, ni l'itinéraire en question. En d'autres termes, l'ensemble des données de navigation (point de départ, liste des points de passage définissant l'itinéraire, point d'arrivée) restent parfaitement confidentielles.

Pour ce faire, le serveur de navigation calcule ou fait calculer par une tierce entité, l'ensemble des chemins optimaux, au sens d'un certain critère, entre chaque couple de points de référence de la zone géographique d'intérêt. Le critère peut être par exemple une distance minimale ou un temps de parcours minimal (en fonction notamment des conditions de circulation). Le calcul utilise une représentation du réseau routier de la zone géographique sous la forme d'un graphe valué dont les sommets sont les points de référence en question et dont les arêtes ont pour poids des distances ou des temps de parcours. La recherche du chemin optimal entre un point de départ et un point d'arrivée revient alors à celle d'un chemin de plus faible poids dans le graphe en question. Ce problème est bien connu en théorie des graphes et plusieurs algorithmes permettent de le résoudre de manière efficace, notamment l'algorithme de Dijkstra ou celui de Floyd-Warshall. On utilisera de préférence l'algorithme de Floyd-Warshall permettant de calculer en une seule fois tous les chemins les plus courts pour toutes les paires de sommets du graphe.

Si l'on suppose que le graphe possède $P$ sommets, la recherche précédente donne $N = P(P - 1)$ chemins pour tous les couples de points du graphe (on suppose de manière générale que le graphe est orienté et que les poids des arêtes de sens opposés entre deux points peuvent différer). Les points de la zone géographique sont indexés et les couples de sommets du graphe sont ordonnés selon une relation d'ordre total, par exemple un ordre lexicographique. Les couples sont rangés dans la base de données sous la forme d'une liste ordonnée selon cette relation d'ordre, un enregistrement relatif à chaque couple de points de la liste contenant, sous forme codée, la liste des points définissant le chemin optimal entre les premier et second points de ce couple. Le cas échéant, l'enregistrement contiendra également le poids du chemin optimal (distance minimale ou temps de parcours minimal). Ainsi, si les points de la zone géographique sont indexés, un enregistrement relatif à un couple $(i_A, i_B)$ peut être constitué d'une liste d'indices $k_1, ..., k_Q$ de points définissant le chemin entre le point de départ $A$, d'indice $i_A$, et le point de destination $B$ d'indice $i_B$. Les indices $k_1, ..., k_Q$ pourront être séparés à l'aide d'un caractère séparateur prédéterminé et la liste des indices pourra être avantageusement codée au moyen d'un codage source, de manière à réduire la longueur des enregistrements.

Il est à noter que la base de données est en général dynamique, notamment quand la navigation est effectuée selon un critère de temps de parcours minimal. Dans ce cas, un réseau de capteurs déployés le long du réseau routier permet de déterminer l'état du trafic et de mettre à jour les temps de parcours relatifs aux différentes arêtes du graphe. Le serveur ou l'entité tierce effectue régulièrement ou sur requête un calcul des chemins optimaux dans le graphe et met à jour la base de données en conséquence.

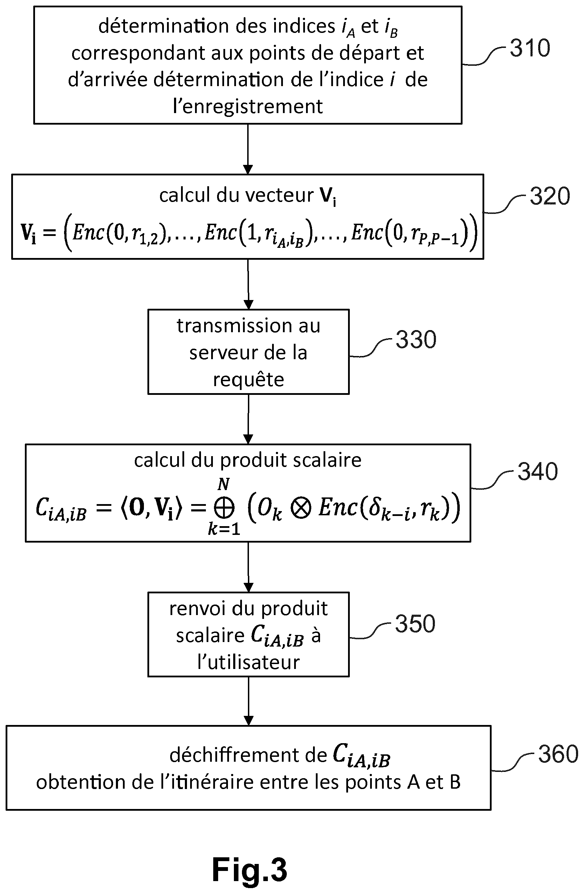

La Fig. 3 représente de manière schématique un ordinogramme d'une méthode de navigation à itinéraires masqués utilisant la méthode d'interrogation confidentielle de la Fig. 2.

A l'étape 310 l'utilisateur détermine le couple d'indices $(i_A, i_B)$ indexant respectivement le point de départ $A$ et le point de destination $B$ de l'itinéraire souhaité, et en déduit l'indice $i$ de l'enregistrement contenant le chemin optimal entre ces deux points.

A l'étape 320, l'utilisateur chiffre $N - 1$ valeurs nulles avec $N = P(P - 1)$, soit $Enc(0, r_{\mu,v})$ avec $\mu = 1, ..., P$; $v = 1, ..., P$; $\mu \neq v$ et $(\mu, v) \neq (i_A, i_B)$, et une valeur 1, soit $Enc(1, r_{i_A, i_B})$, où les $r_{\mu,v}$ sont des nombres aléatoires. L'utilisateur forme ensuite un vecteur de taille $N = P(P - 1)$, soit $\mathbf{V_i} = (Enc(0, r_{1,2}), ..., Enc(1, r_{i_A, i_B}), ..., Enc(0, r_{P, P-1}))$, l'ordre des éléments étant une relation d'ordre total des paires $(\mu, v)$, par exemple l'ordre lexicographique, l'indice $i$ étant l'indice associé à la paire $(i_A, i_B)$ selon cet ordre.

A l'étape 330, l'utilisateur transmet au serveur une requête ayant pour argument le vecteur $\mathbf{V_i}$.

A l'étape 340, le serveur calcule le produit scalaire $C_{i_A, i_B} = C_i$ entre le vecteur $\mathbf{O}$ dont les éléments sont les enregistrements de la base de données (ici les chemins optimaux) et le vecteur $\mathbf{V_i}$ reçu de l'utilisateur.

A l'étape 350, le serveur renvoie le résultat chiffré $C_{i_A, i_B}$ à l'utilisateur.

A l'étape 360, l'utilisateur déchiffre $C_{i_A, i_B}$ et obtient la liste des indices $k_1, ..., k_Q$ des points de la zone géographique définissant l'itinéraire optimal entre les points $A$ et $B$.

On comprend ainsi qu'à aucun moment le serveur n'a connaissance des points $A$ et $B$ (c'est-à-dire des indices $i_A, i_B$) et par conséquent de l'itinéraire de l'utilisateur entre ces points. L'itinéraire de l'utilisateur est donc masqué au serveur.

Lorsque le nombre $P$ de points de référence de la zone géographique est élevé (autrement dit lorsque le nombre de sommets du graphe de navigation est élevé), le vecteur $\mathbf{O}$ est de très grande taille. Afin de réduire la taille de ce dernier, l'utilisateur peut indiquer au serveur une sous-région dans laquelle se trouvent les points $A$ et $B$.

En outre, l'utilisateur peut enregistrer auprès du serveur une liste de requêtes correspondant à ses paires de points favoris de départ et de destination. Ces requêtes se traduisent par une liste de vecteurs $\mathbf{V_i}$ favoris. Le serveur peut alors calculer périodiquement le produit scalaire $C_i$ pour les vecteurs $\mathbf{V_i}$ favoris de la liste en question.

Les produits scalaires $C_i$ peuvent eux-mêmes être considérés comme des éléments d'un vecteur $\mathbf{C}$ de taille $M$ sensiblement plus petite que celle du vecteur $\mathbf{O}$. Il suffit alors à l'utilisateur d'envoyer une sous-requête, chiffrée sur le même principe que précédemment, et permettant de spécifier parmi les requêtes favorites celle dont il souhaite obtenir l'itinéraire.

Plus précisément, l'utilisateur construit un vecteur $\mathbf{U_j} = (Enc(0, r_1), ..., Enc(1, r_j), ..., Enc(0, r_M))^T$ où $M$ est la pluralité de paires de points favoris de départ et de destination. Le serveur calcule alors un second produit scalaire entre le vecteur $\mathbf{C}$ et le vecteur $\mathbf{U_j}$ et renvoie le résultat à l'utilisateur. L'utilisateur déchiffre le second produit scalaire $\langle \mathbf{C}, \mathbf{U_j} \rangle$ pour obtenir le premier produit scalaire $C_i$, puis déchiffre le premier produit scalaire pour obtenir l'enregistrement $O_i$. Le second produit scalaire permet d'effectuer une extraction confidentielle des chemins optimaux pour l'ensemble des couples de points favoris de départ et destination, et le premier produit scalaire permet ensuite d'extraire parmi les chemins optimaux ainsi extraits, l'itinéraire relatif au couple de points souhaité parmi les couples de points favoris.

On comprend que le serveur n'a aucune connaissance des paires de points favoris de départ et de destination et *a fortiori* aucune connaissance de celle pour laquelle il souhaite obtenir l'itinéraire optimal.

La méthode de navigation permet ainsi d'allier une grande simplicité d'utilisation avec un très haut niveau de confidentialité.

## Revendications

**1.** Méthode de navigation confidentielle d'un utilisateur au sein d'une zone géographique donnée, par interrogation confidentielle d'un serveur équipé d'une base de données, **caractérisée en ce que** :

- ladite zone géographique contient une pluralité de points de référence, chaque couple de points de référence étant associé à un indice ;
- ladite base de données contient pour chaque indice correspondant à un couple de points de référence, un enregistrement d'un chemin optimal au sens d'un critère prédéterminé entre ces points, le chemin optimal étant défini par une liste d'indices de points de référence $[k_1,.....,k_q]$ par lequel passe ce chemin ;
- l'utilisateur détermine (310) les indices respectifs $[i_A,i_B]$ d'un couple de points de départ, A, et de destination, B, et en déduit un indice i correspondant du couple de points [A,B] ;
- l'utilisateur construit (220, 320) un vecteur $\mathbf{V_i}$ dont tous les éléments sauf celui de l'indice i sont des chiffrés de zéro et dont l'élément d'indice i est un chiffré d'un, le chiffrement étant effectué au moyen d'un cryptosystème probabiliste vérifiant les propriétés homomorphiques suivantes :

$$Dec_{sk}\left[ Enc_{pk}\left(a,r\right)\oplus Enc_{pk}\left(b,r\right)\right] = a+b$$

$$Dec_{sk}\left[ a\otimes Enc_{pk}\left(b,r\right)\right] = a.b$$

où [sk,pk] est une paire de clés privée et publique de l'utilisateur, $Enc_{pk}$ est une opération de chiffrement au moyen de la clé publique, $Dec_{sk}$ une opération de déchiffrement à l'aide de la clé privée, a,b sont des clairs, $\oplus$ est un opérateur sur l'espace des chiffrés et $\otimes$ est un opérateur entre l'espace des clairs et l'espace des chiffrés ;
- l'utilisateur transmet (230, 330)) au serveur une requête ayant pour argument le vecteur $\mathbf{V_i}$ ;
- le serveur effectue (240, 340) un produit scalaire entre le vecteur des enregistrements $\mathbf{O}$ et le vecteur $\mathbf{V_i}$ et renvoie (250, 350) le produit scalaire $C_i$ ainsi obtenu à l'utilisateur ;
- l'utilisateur déchiffre (260, 360) le produit scalaire $C_i$ pour obtenir l'enregistrement d'indice i de la base de données, ledit enregistrement donnant le chemin optimal entre les points A et B.

2. Méthode d'interrogation confidentielle selon la revendication 1, **caractérisée en ce que** le cryptosystème est un cryptosystème choisi parmi le cryptosystème de Pallier, le cryptosystème de Regev et le cryptosystème de Fan-Vercauteren

3. Méthode de navigation confidentielle selon la revendication 1 ou 2, **caractérisée en ce que** le serveur met à jour périodiquement ou sur requête les chemins optimaux entre les points de référence de la zone géographique.

4. Méthode de navigation confidentielle selon la revendication3, **caractérisée en ce que** le serveur stocke une pluralité de vecteurs $\mathbf{V_i}$ relatifs à une pluralité M de couples de points favoris de départ et de destination.

5. Méthode de navigation confidentielle selon la revendication 4, **caractérisée en ce que** l'utilisateur transmet au serveur une sous-requête spécifiant parmi la pluralité de couples de points favoris, le couple pour lequel il souhaite obtenir un itinéraire et que le serveur retourne le produit scalaire entre le vecteur des enregistrements $\mathbf{O}$ et le vecteur $\mathbf{V_i}$ correspondant à cette sous-requête.

6. Méthode de navigation confidentielle selon la revendication 4, **caractérisée en ce que** le serveur effectue périodiquement un calcul de produit scalaire entre les vecteurs $\mathbf{V_i}$ relatifs aux couples de points favoris et le vecteur des enregistrements $\mathbf{O}$, le serveur construisant un vecteur $\mathbf{C}$ des produits scalaires ainsi obtenus.

7. Méthode de navigation confidentielle selon la revendication 6, **caractérisée en ce que** l'utilisateur construit un second vecteur $\mathbf{U_j}$ de taille M dont tous les éléments sauf celui d'un indice j sont des chiffrés de zéro et dont l'élément d'indice j est un chiffré de un, le chiffrement étant réalisé au moyen dudit cryptosystème, l'utilisateur transmet au serveur une sous-requête ayant pour argument le second vecteur $\mathbf{U_j}$.

8. Méthode de navigation confidentielle selon la revendication 7, **caractérisée en ce que** le serveur effectue un second produit scalaire entre le vecteur $\mathbf{C}$ et le vecteur $\mathbf{U_j}$ et renvoie à l'utilisateur le second produit scalaire ainsi obtenu.

9. Méthode de navigation confidentielle selon la revendication 8, **caractérisée en ce que** l'utilisateur déchiffre le second produit scalaire pour obtenir le produit scalaire $C_i$, puis déchiffre le premier produit scalaire pour obtenir l'itinéraire pour le couple de points souhaités.

**Patentansprüche**

1. Verfahren zur vertraulichen Navigation eines Benutzers innerhalb eines gegebenen geographischen Gebiets durch vertrauliche Abfrage eines mit einer Datenbank ausgestatteten Servers, **dadurch gekennzeichnet, dass**

   - das geographische Gebiet eine Vielzahl von Referenzpunkten enthält, wobei jedes Paar von Referenzpunkten einem Index zugeordnet ist;
   - die Datenbank für jeden Index, der einem Paar von Referenzpunkten entspricht, eine Aufzeichnung eines optimalen Pfades im Sinne eines vorbestimmten Kriteriums zwischen diesen Punkten enthält, wobei der optimale Pfad durch eine Liste von Referenzpunktindizes $[k_1, ..., k_q]$ definiert ist, durch die dieser Pfad verläuft;
   - der Benutzer die jeweiligen Indizes $[I_A, I_B]$ eines Startpunktpaares A und eines Zielpunktpaares B bestimmt (310) und davon einen entsprechenden Index i des Punktpaares [A, B] ableitet;
   - der Benutzer einen Vektor $\mathbf{V_i}$ konstruiert (220, 320), von welchem alle Elemente außer dem mit Index i Schlüsseltextangaben von Null sind und von welchem das Element mit Index $i$ eine Schlüsseltextangabe von eins ist, wobei die Verschlüsselung unter Verwendung eines probabilistischen Kryptosystems durchgeführt wird, das die folgenden homomorphen Eigenschaften erfüllt:

   $$Dec_{sk} [Enc_{pk} (a, r) \oplus Enc_{pk} (b, r)] = a + b$$

   $$Dec_{sk} [a \otimes Enc_{pk} (b, r)] = a.\, b$$

   worin

   [sk, pk] ein Paar aus einem privaten und einem öffentlichen Schlüssel des Benutzers ist, $Enc_{pk}$ eine Verschlüsselungsoperation mittels des öffentlichen Schlüssels ist, $Dec_{sk}$ eine Entschlüsselungsoperation mittels des privaten Schlüssels ist, $a,\ b$ Klartextangaben sind, $\oplus$ ein Operator im Raum der Schlüsseltextangaben und $\otimes$ ein Operator zwischen dem Raum der Klartextangaben und dem Raum der Schlüsseltextangaben ist;
   - der Benutzer eine Anfrage an den Server mit dem Vektor $\mathbf{V_1}$ als Argument übermittelt (230, 330);
   - der Server ein Skalarprodukt zwischen dem Datensatzvektor $\mathbf{O}$ und dem Vektor $\mathbf{V_1}$ erstellt (240, 340) und das so erhaltene Skalarprodukt $\mathbf{C_i}$ an den Benutzer zurücksendet (250, 350);
   - der Benutzer das Skalarprodukt $\mathbf{C_i}$ entschlüsselt (260, 360), um den Datensatz mit Index i der Datenbank zu erhalten, wobei der Datensatz den optimalen Pfad zwischen den Punkten A und B darstellt.

2. Verfahren zur vertraulichen Abfrage nach Anspruch 1, **dadurch gekennzeichnet, dass** das Kryptosystem ein Kryptosystem ist, ausgewählt aus dem Pallier-Kryptosystem, dem Regev-Kryptosystem und dem Fan-Vercauteren-Kryptosystem.

3. Verfahren zur vertraulichen Navigation nach Anspruch 1 oder 2, **dadurch gekennzeichnet, dass** der Server periodisch oder auf Anfrage die optimalen Pfade zwischen den Referenzpunkten des geografischen Gebiets aktualisiert.

4. Verfahren zur vertraulichen Navigation nach Anspruch 3, **dadurch gekennzeichnet, dass** der Server eine Vielzahl von Vektoren $\mathbf{V}_i$ speichert, die sich auf eine Vielzahl $\mathbf{M}$ von bevorzugten Start- und Zielpunktpaaren beziehen.

5. Verfahren zur vertraulichen Navigation nach Anspruch 4, **dadurch gekennzeichnet, dass** der Benutzer eine Unteranfrage an den Server übermittelt, welche aus der Vielzahl der bevorzugten Punktpaare das Paar angibt, für das er eine Route erhalten möchte, und dass der Server das Skalarprodukt zwischen dem Datensatzvektor $\mathbf{O}$ und dem dieser Unteranfrage entsprechenden Vektor $\mathbf{V}_i$ zurücksendet.

6. Verfahren zur vertraulichen Navigation nach Anspruch 4, **dadurch gekennzeichnet, dass** der Server periodisch eine Skalarproduktberechnung zwischen den Vektoren $\mathbf{V}_i$ bezüglich der bevorzugten Punktpaare und dem Datensatzvektor $\mathbf{O}$ durchführt, wobei der Server einen Vektor $\mathbf{C}$ der so erhaltenen Skalarprodukte konstruiert.

7. Verfahren zur vertraulichen Navigation nach Anspruch 6, **dadurch gekennzeichnet, dass** der Benutzer einen zweiten Vektor $\mathbf{U}_j$ der Größe $\mathbf{M}$ konstruiert, von welchem alle Elemente außer dem mit Index $j$ Schlüsseltextangaben von Null sind und von welchem das Element mit Index $j$ eine Schlüsseltextangabe von eins ist, wobei die Verschlüsselung unter Verwendung des Kryptosystems durchgeführt wird, wobei der Benutzer eine Unteranfrage mit dem

zweiten Vektor $\mathbf{U_j}$ als Argument an den Server übermittelt.

8.  Verfahren zur vertraulichen Navigation nach Anspruch 7, **dadurch gekennzeichnet, dass** der Server ein zweites Skalarprodukt zwischen dem Vektor **C** und dem Vektor $\mathbf{U_j}$ erstellt und das so erhaltene zweite Skalarprodukt an den Benutzer zurücksendet.

9.  Verfahren zur vertraulichen Navigation nach Anspruch 8, **dadurch gekennzeichnet, dass** der Benutzer das zweite Skalarprodukt entschlüsselt, um das Skalarprodukt $\mathbf{C_i}$ zu erhalten, dann das erste Skalarprodukt entschlüsselt, um die Route für das gewünschte Punktepaar zu erhalten.

## Claims

1.  A confidential navigation method of a user within a given geographical area, by confidentially querying a server equipped with a database, **characterised in that**:

    - said geographical area contains a plurality of reference points, each couple of reference points being associated with an index;
    - said database contains for each index corresponding to a couple of reference points, a record of an optimum path as a predetermined criterion between these points, the optimum path being defined by a list of indices of reference points $[k_1,....,kq]$ through which this path passes;
    - the user determines (310) the respective indices $[I_A, I_B]$ of a couple of starting, *A*, and destination, *B* points, and deduces an index *i* corresponding to the couple of points $[A, B]$ therefrom;
    - the user builds (220, 320) a vector $\mathbf{V_i}$ all the elements of which except for that of the index *i* are ciphertexts of zero and the element of index *i* of which is a ciphertext of one, the encryption being made by means of a probabilistic cryptosystem satisfying the following homomorphic properties:

$$Dec_{sk}\left[ Enc_{pk}\left(a,r\right) \oplus Enc_{pk}\left(b,r\right)\right] = a+b$$

$$Dec_{sk}\left[ a \otimes Enc_{pk}\left(b,r\right)\right] = a.b$$

    where [sk,pk] is a pair of private and public keys of the user, $Enc_{pk}$ is an encryption operation by means of the public key, $Dec_{sk}$ is a decryption operation using the private key, *a,b* are plaintexts, $\oplus$ is an operator on the ciphertext space and $\otimes$ is an operator between the plaintext space and the ciphertext space;
    - the user transmits (230, 330) a request having the vector $\mathbf{V_i}$ as an argument to the server;
    - the server performs (240, 340) a scalar product between the record vector **O** and the vector $\mathbf{V_i}$ and returns (250, 350) the scalar product $C_i$ thus obtained to the user;
    - the user decrypts (260, 360) the scalar product $C_i$ to obtain the record of index *i* of the database, said record giving the optimum path between points *A* and *B*.

2.  The confidential querying method according to claim 1, **characterised in that** the cryptosystem is a cryptosystem chosen from the Paillier cryptosystem, the Regev cryptosystem and the Fan-Vercauteren cryptosystem.

3.  The confidential querying method according to claim 1 or 2, **characterised in that** the server updates the optimum paths between the reference points of the geographical area periodically or upon request.

4.  The confidential querying method according to claim 3, **characterised in that** the server stores a plurality of vectors $\mathbf{V_i}$ relating to a plurality *M* of couples of favourite starting and destination points.

5.  The confidential navigation method according to claim 4, **characterised in that** the user transmits to the server a sub-request specifying from the plurality of couples of favourite points, the couple for which he/she desires to obtain a route and that the server returns the scalar product between the record vector **O** and the vector $\mathbf{V_i}$ corresponding to this sub-request.

6.  The confidential navigation method according to claim 4, **characterised in that** the server periodically performs a scalar product calculation between the vectors $\mathbf{V_i}$ relating to the couples of favourite points and the record vector $\mathbf{O}$, the server building a vector $\mathbf{C}$ of the scalar products thus obtained.

7. The confidential navigation method according to claim 6, **characterised in that** the user builds a second vector $\mathbf{U_j}$ of the size $M$ all the elements of which except for that of an index $j$ are ciphertexts of zero and the element of index $j$ of which is a ciphertext of one, the encryption being made by means of said cryptosystem, the user transmits a sub-request having the second vector $\mathbf{U_j}$ as an argument to the server.

8. The confidential navigation method according to claim 7, **characterised in that** the server performs a second scalar product between the vector $\mathbf{C}$ and the vector $\mathbf{U_j}$ and returns the second scalar product thus obtained to the user.

9. The confidential navigation method according to claim 8, **characterised in that** the user decrypts the second scalar product to obtain the scalar product $C_i$, and then decrypts the first scalar product to obtain the route for the couple of desired points.

120  110

$$Q(i)$$

$$O_i$$

$$R(O, Q(i))$$

$$O[1, \ldots, N]$$  130

**Fig.1**

détermination de l'indice $i$ de l'enregistrement souhaité — 210

calcul du vecteur $\mathbf{V_i}$

$$\mathbf{V}_i = \big(Enc(0, r_1), \ldots, Enc(1, r_i), \ldots, Enc(0, r_N)\big)^T$$

— 220

transmission au serveur de la requête — 230

calcul du produit scalaire

$$C_i = \langle \mathbf{O}, \mathbf{V_i} \rangle = \bigoplus_{k=1}^{N} \big(O_k \otimes Enc(\delta_{k-i}, r_k)\big)$$

— 240

renvoi du produit scalaire $C_i$ à l'utilisateur — 250

déchiffrement de $C_i$ obtention de l'enregistrement $O_i$ — 260

**Fig.2**

détermination des indices $i_A$ et $i_B$ correspondant aux points de départ et d'arrivée détermination de l'indice $i$ de l'enregistrement  /—310

calcul du vecteur $\mathbf{V_i}$  /—320

$$\mathbf{V_i} = \left( Enc(0, r_{1,2}), \ldots, Enc\left(1, r_{i_A, i_B}\right), \ldots, Enc\left(0, r_{P,P-1}\right) \right)$$

transmission au serveur de la requête  /—330

calcul du produit scalaire  /—340

$$C_{iA,iB} = \langle \mathbf{O}, \mathbf{V_i} \rangle = \bigoplus_{k=1}^{N} \left( O_k \otimes Enc(\delta_{k-i}, r_k) \right)$$

renvoi du produit scalaire $C_{iA,iB}$ à l'utilisateur  /—350

déchiffrement de $C_{iA,iB}$ obtention de l'itinéraire entre les points A et B  /—360

# Fig.3

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **SAMANTHULA BHARATH K et al.** *Privacy-Preserving Protocols for Shortest Path Discovery over Outsourced Encrypted Graph Data*
- **G. GHINITA et al.** Private queries in Location Based Services : anonymizers are not necessary. *Proc. of Sigmod,* 2008, 121-132
- **S. BHATATH et al.** Privacy-preserving protocols for shortest path discovery over outsourced encrypted data graph data. *IEEE Int'l Conférence on information reuse and intégration,* 13 Août 2015, 427-434